# EUROPEAN PATENT APPLICATION

(11) **EP 2 600 515 A1**
(43) Date of publication of application: **05.06.2013**
(21) Application number: 12180819.0
(22) Date of filing: 17.08.2012
(51) Int. Cl.: H02M 5/02, H02P 13/06, G05F 1/14

(54) **Ac electrical power regulatory system**

(30) Priority: 01.09.2011 GB 201115045
(71) Applicant: Rolls-Royce plc, London SW1E 6AT (GB)
(72) Inventor: Zizzo, Claudio, Derby, DE22 1BP (GB)
(74) Representative: Hartley, Andrew Colin

(57) **Abstract**

A system is provided for regulating AC electrical power delivered from a source to a load. The system has a voltage regulating device which, in use, is connected at an input side thereof to the source and at an output side thereof to the load. The voltage regulating device is controllable to vary the ratio of voltage amplitudes at the input side and the output side. The system further has a measuring arrangement for measuring the voltage amplitude and the voltage frequency at the input side. The system further has a control device for determining a desired ratio of the voltage amplitudes depending on the measured voltage amplitude and the measured voltage frequency. The control device is adapted to issue an output command to the voltage regulating device, the output command controlling the voltage regulating device to provide the voltage amplitude ratio determined by the control device.

## Description

The present invention relates to a system for regulating AC electrical power delivered from a source to a load.

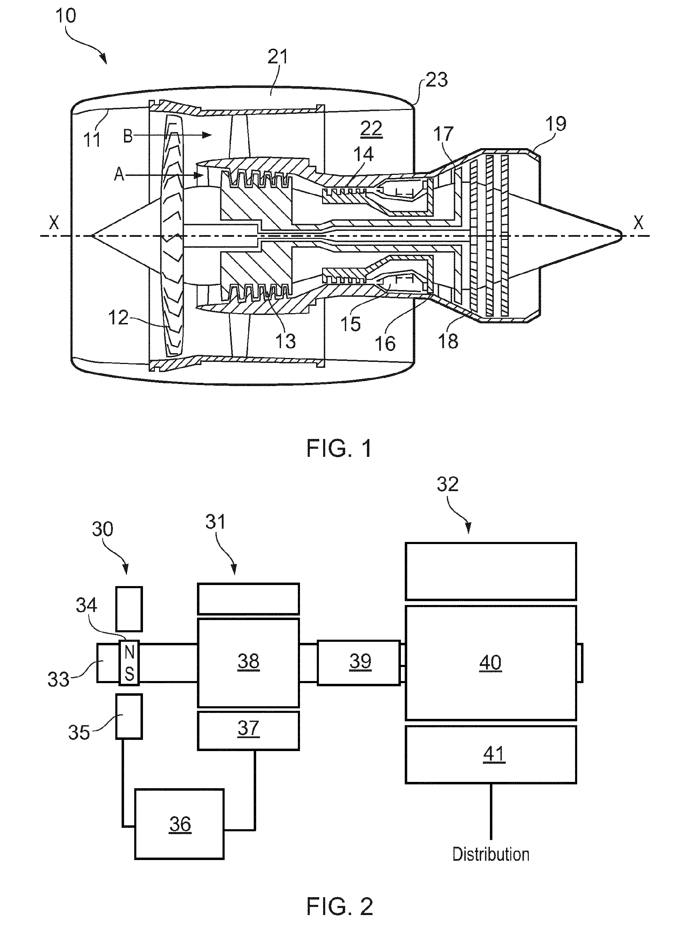

With reference to Figure 1, a ducted fan gas turbine engine generally indicated at 10 has a principal and rotational axis X-X. The engine comprises, in axial flow series, an air intake 11, a propulsive fan 12, an intermediate-pressure compressor 13, a high-pressure compressor 14, combustion equipment 15, a high-pressure turbine 16, and intermediate-pressure turbine 17, a low-pressure turbine 18 and a core engine exhaust nozzle 19. A nacelle 21 generally surrounds the engine 10 and defines the intake 11, a bypass duct 22 and a bypass exhaust nozzle 23.

The gas turbine engine 10 works in a conventional manner so that air entering the intake 11 is accelerated by the fan 12 to produce two air flows: a first air flow A into the intermediate-pressure compressor 13 and a second air flow B which passes through the bypass duct 22 to provide propulsive thrust. The intermediate-pressure compressor 13 compresses the air flow A directed into it before delivering that air to the high pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive the high, intermediate and low-pressure turbines 16, 17, 18 before being exhausted through the nozzle 19 to provide additional propulsive thrust. The high, intermediate and low-pressure turbines respectively drive the high and intermediate-pressure compressors 14, 13 and the fan 12 by suitable interconnecting shafts.

Electrical power is usually extracted from such an engine for use within the aircraft by a wound-field synchronous variable speed generator. The generator can be mechanically connected to either the high-pressure shaft or to the intermediate-pressure shaft, via a transmission drive and accessory gearbox. DC current is applied to the rotor of the generator in the field winding. The frequency of the current/voltage produced in the generator stator winding is thus directly proportional to the speed of the shaft to which the generator is connected, the gear ratio between the engine shaft and the generator, and the number of pole pairs in the generator.

In contemporary aircraft platforms, the output frequency of the generator may vary over a range of e.g. 360 to 800 Hz, and the corresponding voltage amplitude may vary over a range of e.g. 96 to 136 Vrms; the exact numbers depending upon the platform, and corresponding directly to an acceptable speed range for the shaft to which the generator is connected. This type of generator is known as a variable speed generator (VSG).

The generator frequency range is provided to the suppliers of electrical equipment within the aircraft so that their equipment can be configured to receive voltage in this frequency range. However, it would be desirable to improve the regulation of electrical power delivered by the VSG. This could improve electrical equipment reliability and/or allow the equipment to be less highly rated.

Accordingly, a first aspect of the present invention provides a system for regulating AC electrical power delivered from a source (such as a variable speed generator) to a load, the system having:
a voltage regulating device which, in use, is connected at an input side thereof to the source and at an output side thereof to the load, the voltage regulating device being controllable to vary the ratio of the voltage amplitudes at the input side and the output side;
a measuring arrangement for measuring the voltage amplitude and the voltage frequency at the input side; and
a control device for determining a desired ratio of the voltage amplitudes depending on the measured voltage amplitude and the measured voltage frequency;
wherein the control device is adapted to issue an output command to the voltage regulating device, the output command controlling the voltage regulating device to provide the voltage amplitude ratio determined by the control device.

In non-aerospace applications (e.g. conventional land-based power generation), it is known to use AC voltage stabilization to keep a regulated voltage on a load independent of variation of the input AC voltage amplitude (e.g. a 220V main). This can be achieved, for example by using a transformer with a variable turn ratio or an autotransformer with multiple taps. However, in such applications, the voltage frequency provided by the source is generally constant. An advantage of the present invention is that voltage regulation is performed on the basis of the measured voltage amplitude and the measured voltage frequency. Thus, particularly in aerospace applications, where the output frequency range of the source can vary over a large frequency range, the system improves control of the delivered power, allowing electrical equipment to be operated more reliably.

A second aspect of the present invention provides the use of the system according to the first aspect for regulating AC electrical power delivered from a source (such as a variable speed generator) to a load. For example, a method for regulating AC electrical power delivered from a source to a load can include: providing a system according to the first aspect, the voltage regulating device being connected at an input side thereof to the source and at an output side thereof to the load; using the measuring arrangement to measure the voltage amplitude and the voltage frequency at the input side; using the control device to determine a desired ratio of the voltage amplitudes depending on the measured voltage amplitude and the measured voltage frequency; and controlling the voltage regulating device to provide the voltage amplitude ratio determined by the control device.

A third aspect of the present invention provides a variable speed generator (e.g. an aeroengine variable speed generator) having the system according to the first aspect for regulating AC electrical power delivered from the generator to a load.

A fourth aspect of the present invention provides a load (e.g. an aeroengine ignition unit) having the system according to the first aspect for regulating AC electrical power delivered from a generator to the unit.

Optional features of the invention will now be set out. These are applicable singly or in any combination with any aspect of the invention.

The voltage regulating device may be a transformer having a variable primary to secondary ratio. For example, the transformer can be a transformer with a variable turn ratio, or an autotransformer with a plurality of taps. Alternatively, a more complicated switch mode power supply, such as a combined step down/up (or buck/boost power supply) could be used, but such an arrangement would tend to lose the simplicity and reliability of a transformer-based device.

Typically, the measuring arrangement measures the voltage amplitude and the voltage frequency directly at the input side. However, alternatively either or both of these quantities may be measured indirectly e.g. from the voltage amplitude and the voltage frequency at the output side. In particular, if the voltage regulating device is a transformer then the input voltage frequency is equal to the output voltage frequency, and the output voltage amplitude is linked to the input voltage amplitude by a known ratio.

The measuring arrangement may also measure the power level of the delivered power at the input side control device, and the control device may determine the desired voltage amplitude ratio also depending on the measured power level. Typically, measurement of the power level involves measurement of the current amplitude of the delivered power at the input side. Alternatively, if the load is known, the power level can be determined from the measured input voltage and frequency. In general, if the system is connected to a load (e.g. built into an engine ignition unit) then measuring input voltage amplitude and frequency is a good predictor of the current (and hence power) into the load, and the additional complication and loss associated with circuitry to measure current amplitude can be avoided.

Preferably, the control device is further adapted to receive a request signal corresponding to a desired delivered power level to the load, and the control device also determines the desired voltage amplitude ratio depending on the request signal. This allows the system not only to account for voltage amplitude and frequency fluctuations on the supply side, but also enables the amount of electrical power delivered to the load to be increased or reduced, as required. For example, the AC electrical power delivered from the source to the load may be regulated to reduce an in-rush current to the load. In another example, the AC electrical power delivered from the source to the load may be regulated to deliver a power boost to the load. In aerospace applications, such a power boost may be needed for a quick relight of an aeroengine in the event of a flame out.

The system can be used in an aircraft, whereby the source can be an aeroengine variable speed generator and/or the load can be an aeroengine ignition unit.

Further optional features of the invention are set out below.

Embodiments of the invention will now be described by way of example with reference to the accompanying drawings in which:
Figure 1 shows a schematic longitudinal section through a ducted fan gas turbine engine;
Figure 2 shows a schematic diagram of a variable frequency starter generator;
Figure 3 shows a block diagram of a system for regulating AC electrical power according to an embodiment of the present invention;
Figure 4 shows a corresponding circuit diagram for the system of Figure 3;
Figure 5 shows a flow chart illustrating the control architecture for the system of Figure 3;
Figure 6 shows a measured voltage amplitude for an AC input voltage amplitude of 126 Vpeak to 184 Vpeak and a frequency range of 360 to 800 Hz (a) without and (b) with a high pass frequency filter (2^{nd} order Bessel, notch at 600 Hz, gain of 1.5);
Figure 7 shows a plot of input voltage against time, demonstrating variation in input voltage amplitude;
Figure 8 shows a plot of input voltage against time, demonstrating variation in input voltage frequency;
Figure 9 shows a plot of input voltage against time, demonstrating variation in input voltage amplitude and frequency;
Figure 10 shows a plot of the current on a capacitive load against time without the use of the system of the present invention during a period in which the voltage amplitude increases by x1.35 and the voltage frequency increases by x2.2;
Figure 11 shows a plot corresponding to that of Figure 10 for the same increases in voltage amplitude and frequency but with the use of a system according to the present invention having a transformer with winding ratios of 1:14-4-4;
Figure 12 shows a plot corresponding to that of Figure 10 for the same increases in voltage amplitude and frequency but with the use of a system according to the present invention having a transformer with winding ratios of 1:12-5-5; and
Figure 13 shows a plot of output voltage against time over a one second interval where a power boost command arrives at 0.5 sec.

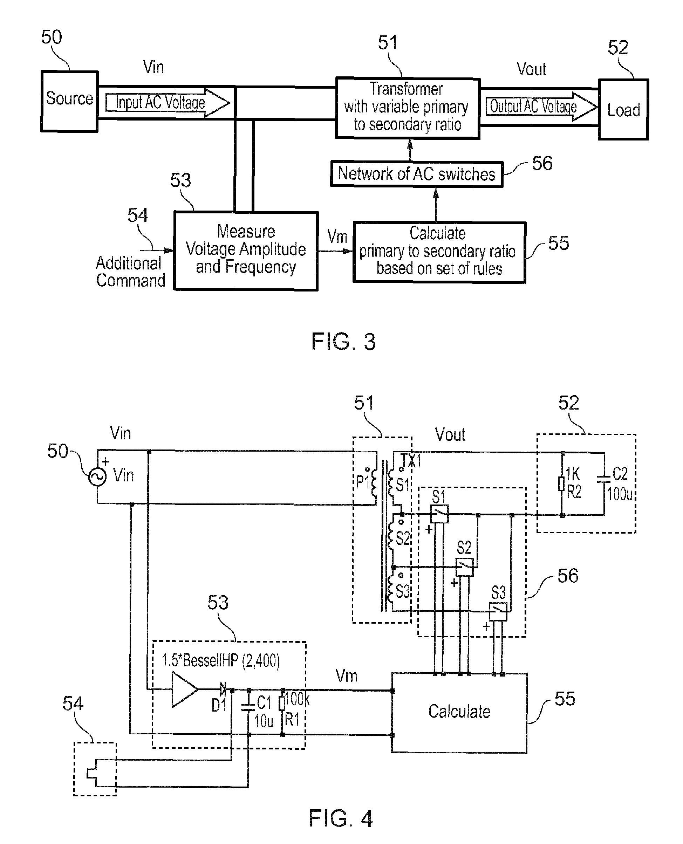

Figure 3 shows a block diagram and Figure 4 shows a corresponding circuit diagram of a system for regulating AC electrical power according to an embodiment of the present invention.

A source 50, such as a variable speed generator, provides an input AC voltage Vin to an input side of a transformer (or autotransformer) 51 with a variable primary to secondary ratio. A load 52 receives an output AC voltage Vout from an output side of the transformer.

A measurement unit 53 measures the voltage amplitude and the voltage frequency of the delivered power at the input side. Optionally it can also measure the current/power delivered. The measurement unit can also acquire additional commands 54, such as request signals to boost or reduce power. A control unit 55 then receives a measurement signal Vm from the measurement unit, Vm containing information on the measured parameters and optionally the additional commands (such as a request for a power boost or power reduction). Using Vm, the control unit implements/calculates a control function (e.g. Control Function(Vin_amplitude, Vin_frequency, lin, commands)) corresponding to a desired voltage amplitude ratio of the transformer. The control function in turn determines an output command that specifies the setting of a network of AC switches 56 (which can be e.g. solid state switches, relays, thyristors etc.). The different switch settings control the output voltage of the transformer 51 consistent with the desired voltage amplitude ratio by changing the transformer primary to secondary ratio. As shown in Figure 4, the transformer is an autotransformer and the different switch settings select respective transformer taps.

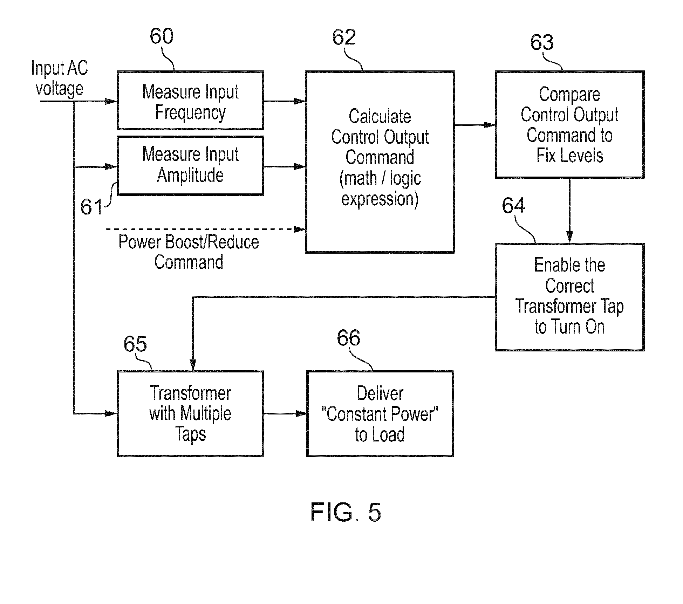

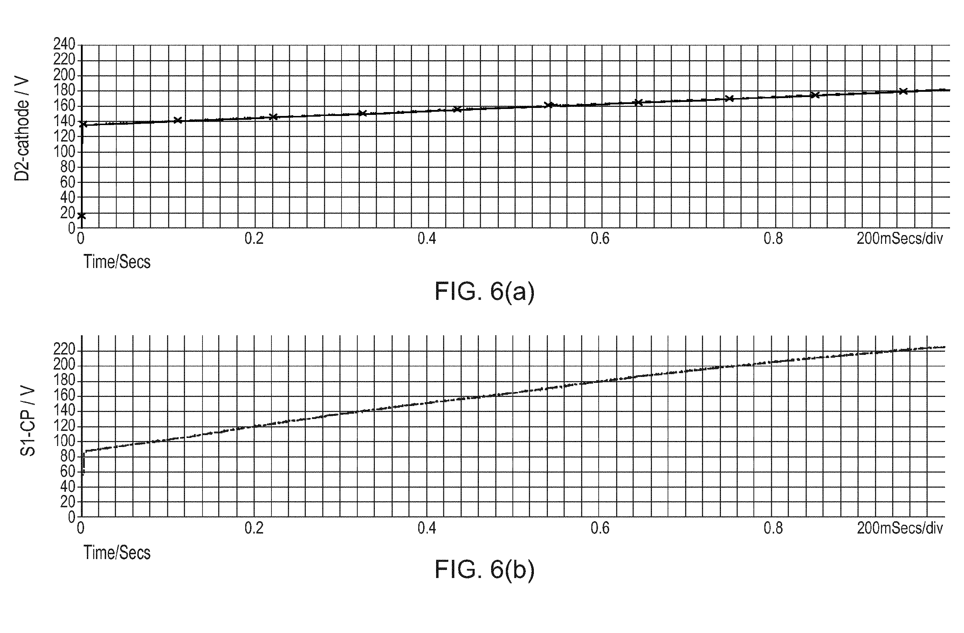

The control architecture is explained in more detail with reference to the flow diagram of Figure 5. The voltage frequency and voltage amplitude of the input AC voltage are measured 60, 61. This can be done in several ways. If the system is based on a microprocessor, then the input voltage can be scaled down and applied to an analogue to digital converter which allows the software to extract the peak to peak amplitude (thus the amplitude value) and the frequency (for example by dividing the number of positive peaks measured in 1 second). Alternatively, the voltage frequency and voltage amplitude can be measured using analogue circuitry. More specifically, as shown in Figure 4, the measurement unit 53 can contain a "peak and hold" circuit (with a slow discharge path) to sense the amplitude of the input voltage, and a high pass filter in series with the "peak and hold" circuit to allow the frequency to be factored in. Figure 6 shows a measured voltage amplitude for an AC input voltage amplitude of 126 Vpeak to 184 Vpeak and a frequency range of 360 to 800 Hz (a) without and (b) with a high pass frequency filter (2^{nd} order Bessel, notch at 600 Hz, gain of 1.5). This arrangement makes the measurement signal Vm provided by the measurement unit sensitive to both change in input voltage amplitude and frequency.

Thus the measured voltage frequency and voltage amplitude output can be combined as Vm shown in Figures 3 and 4 or kept as two separate parameters as shown in Figure 5. Either way, these parameters are the inputs to the next block 62 which calculates the Control_Output_Command. In software this can be implemented with a logical or mathematical function, or with a simple look up table which maps the desired value of the control output command versus the input frequency, amplitude and (if applicable) a power boost/reduction command.

An example of this control logic for a 3 taps transformer is as follows:
- Control_Output_Command = Value_Boost IF (V_amplitude < A1 and V_freq < F1)
- Control_Output_Command = Value_Nominal IF (A1 < V_amplitude < A2 and V_freq <F1)
- Control_Output_Command = Value_Reduce IF (V_amplitude >= A2 or V_freq >= F1)
where A1 and A2 are amplitude threshold values and F1 is a frequency threshold value; Value_Boost, Value_Nominal, Value_Reduce are defined logic or physical values to which Control_Output_Command is set; and V_amplitude is the measured amplitude and V_freq is the measured frequency.

In another example:
- Control_Output_Command = Value_Boost IF (V_amplitude/V_nominal_amplitude) x (V_freq / V_ nominal_freq) < 0.75
- Control_Output_Command = Value_Nominal IF 0.75 <= (V_amplitude/V_nominal_amplitude) x (V_freq / V_nominal_freq) < 1.25
- Control_Output_Command = Value_Reduce IF (V_amplitude/V_nominal_amplitude) x (V_freq / V_nominal_freq) >= 1.25
   where V_nominal_amplitude and V_nominal_freq are the nominal values for amplitude and frequency of the input voltage and 0.75, 1.25 are some user defined thresholds.

If a Power_Boost_Command is used, then this forces the logic to set Control_Output_Command = Value_Boost. Conversely, if a Power_Reduce_Command is used, then this forces the logic to set Control_Output_Command = Value_ Reduce.

Based on the Control_Output_Command the next functional block 63 commands the correct transformer tap controller 64, e.g.:
- IF Control_Output_Command = Value_Boost THEN select the tap which raises the output voltage amplitude (e.g. ratio primary to secondary 1:1.4)
- IF Control_Output_Command = Value_Nominal THEN select the tap which sets the output voltage amplitude to the nominal or centre value (e.g. ratio primary to secondary 1:1)
- IF Control_Output_Command = Value_Boost THEN select the tap which lowers the voltage amplitude (e.g. ratio primary to secondary 1:0.6)

At this point in a microprocessor based implementation, the microprocessor outputs a digital command to one of the switches which enables the correct transformer tap to activate 65 thus keeping the power delivered to the load regulated 66. Evidently, there are many way to implement the above logic either using entirely analogue circuitry (as in Figure 4), mixing analogue and digital circuitry, or using a microprocessor based system. Other control logics and algorithm are also possible.

We next provide examples of how the system can work for a three taps transformer.

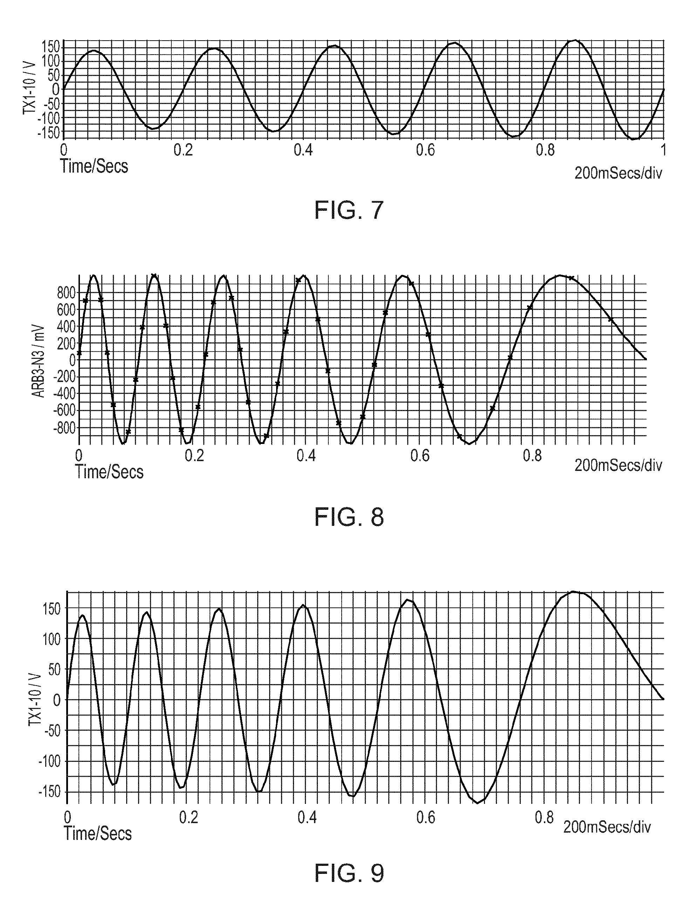

If, for example, the goal is to keep the power delivered to the load constant then the output voltage can be varied in order to keep the power as constant as possible regardless of variation to input voltage amplitude (as shown in Figure 7), input voltage frequency (as shown in Figure 7) or both (as shown in Figure 8).

In the example shown in Figure 4 the transformer 51 secondary has three windings (or three taps) and the network of switches 56 has 3 switches, S1, S2, S3. The control logic (which can be implemented using simply electronic comparators) can then be:
- S1 switch ON when measured voltage Vm is less than S_A (S2 and S3 are OFF)
- S2 switch ON when measured voltage Vm is between S_A and S_B (S1 and S3 are OFF)
- S3 switch ON when measured voltage Vm is greater than S_B (S1 and S2 are OFF)
   where S_A and S_B are voltage thresholds that may, as an example, be respectively 150 V and 170 V.

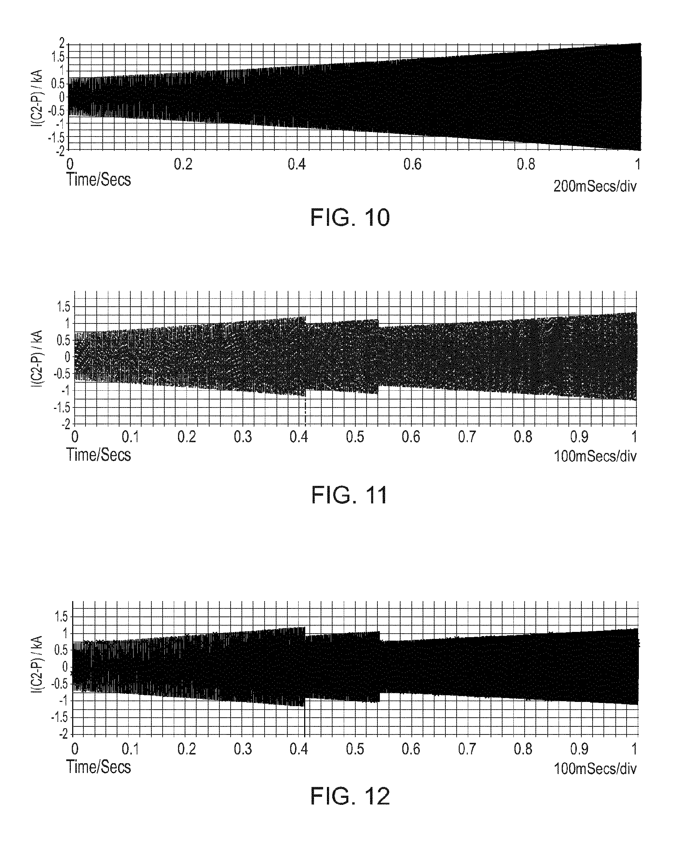

If the load 52 attached to the secondary of the transformer 51 is a capacitive load (as shown in Figure 4) which draws more current when the frequency increases, then, when the input frequency increases, the controller would reduce the output voltage amplitude by changing the transformer primary (n turns on primary) to secondary (s turns on secondary) ratio (e.g. s is reduced) thus keeping the power provided to the load constant. Figure 10 shows a plot of the current on a capacitive load against time without the use of the system of the present invention during a period in which the voltage amplitude increases by x1.35 (136 Vpeak to 184 Vpeak) and the voltage frequency increases by x2.2 (360 Hz to 800 Hz). As a result of these increases, the current increases by a factor of 3 (700 A to 2100 A) such that any resistive load in the current path will see an increase in power dissipation of a factor of 9 (current square). Figure 11 shows the corresponding plot for the same increases in voltage amplitude and frequency with the use of the system (S_A = 150 V and S_B 170 V). By controlling the voltage amplitude ratio of the transformer, the same input variation results in a current change of x1.85, corresponding to an increase in power dissipation of a factor of 3.4.

The current increase can be reduced by increasing the number of taps on the transformer. However, even with just three taps, by changing the transformer turn ratio the current increase can be further reduced. In the plot of Figure 11 the transformer has three stages providing winding ratios of 1:14-4-4. Figure 12 shows another plot corresponding to Figure 10 for the same increases in voltage amplitude and frequency and using of the system (S_A = 150 V and S_B 170 V), but with winding ratios of 1:12-5-5. With this arrangement, the current value to the capacitive load has further been reduced to x1.7 (increase in power dissipation of a factor of 2.89).

Conversely if the input voltage amplitude or frequency reduces from its nominal value then the controller can increase the transformer primary to secondary ratio (e.g. s is increased) to compensate.

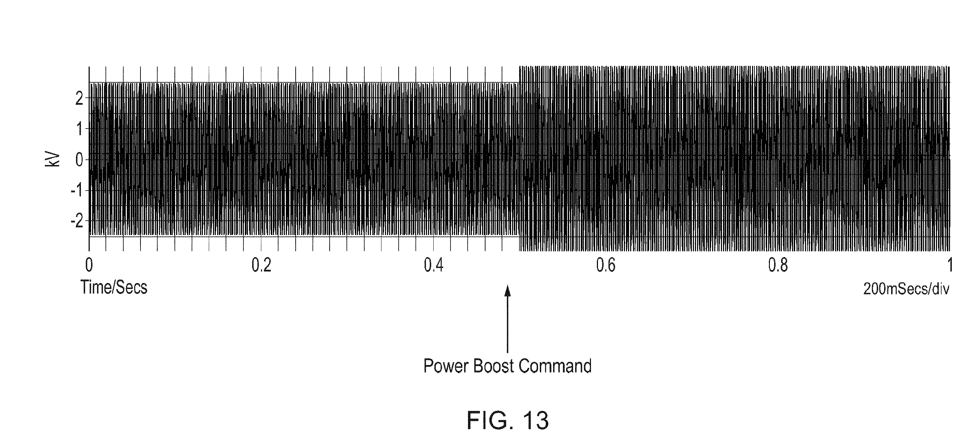

In the above example, the goal was to keep the power delivered to the load constant. However, in a second example there may be a requirement to limit an in-rush current when the load is connected, or the voltage is applied to the system. In this scenario, the transformer primary to secondary ratio can be reduced (requested e.g. by a power reduce command as shown in Figure 5) to limit the current. Likewise, in another example, if the load requires a power boost (requested e.g. by a power boost command as shown in Figure 5), then the voltage to the secondary can be increased by changing the transformer primary to secondary ratio. Figure 13 shows a plot of output voltage against time over a one second interval where a power boost command arrives at 0.5 sec.

Advantageously, the system of the present invention implements a voltage regulating device control strategy based on at least measurements of input voltage amplitude and frequency, to achieve particular goals of, for example, keeping the output voltage constant, keeping the output power constant, providing a soft start (to limit in-rush current/power), and providing a power boost to the load. The system can achieve this using a simple, reliable and robust transformer with multiple taps (variable primary to secondary ratio) that is suitable for aircraft applications.

Keeping a regulated power to the load has the benefit that the electronics components in the system and in the load are less stressed, thus increasing the system and load reliability as well as allowing the use of components which are not over-rated.

While the invention has been described in conjunction with the exemplary embodiments described above, many equivalent modifications and variations will be apparent to those skilled in the art when given this disclosure. For example, the transformer can be a standard transformer with one primary and a number of secondaries (as shown in Figure 4) or a primary with multiple taps and one secondary. Accordingly, the exemplary embodiments of the invention set forth above are considered to be illustrative and not limiting. Various changes to the described embodiments may be made without departing from the spirit and scope of the invention.

## Claims

1. A system for regulating AC electrical power delivered from a source to a load, the system having:
a voltage regulating device (51) which, in use, is connected at an input side thereof to the source and at an output side thereof to the load, the voltage regulating device being controllable to vary the ratio of the voltage amplitudes at the input side and the output side;
a measuring arrangement (53) for measuring the voltage amplitude, current amplitude and the voltage frequency at the input side; and
a control device (55) for determining a desired ratio of the voltage amplitudes depending on the measured voltage amplitude, the measured voltage frequency and the measured current amplitude;
wherein the control device is adapted to issue an output command to the voltage regulating device, the output command controlling the voltage regulating device to provide the voltage amplitude ratio determined by the control device.

2. A system according to claim 1, wherein the voltage regulating device is a transformer having a variable primary to secondary ratio.

3. A system according to any one of the previous claims, wherein the measuring arrangement also measures the power level of the delivered power at the input side control device, and the control device determines the desired voltage amplitude ratio also depending on the measured power level.

4. A system according to any one of the previous claims, wherein the control device is further adapted to receive a request signal (54) corresponding to a desired delivered power level to the load, and the control device also determines the desired voltage amplitude ratio depending on the request signal.

5. Use of the system according to any one of the previous claims for regulating AC electrical power delivered from a source to a load.

6. A variable speed generator having the system according to any one of claims 1 to 4 for regulating AC electrical power delivered from the generator to a load.

7. An engine ignition unit having the system according to any one of claims 1 to 4 for regulating AC electrical power delivered from a generator to the unit.
